# EUROPÄISCHE PATENTANMELDUNG

(11) **EP 0 864 802 A1**
(43) Veröffentlichungstag der Anmeldung: **16.09.1998**
(21) Anmeldenummer: 98104114.8
(22) Anmeldetag: 07.03.1998
(51) Int. Cl.: F16N 11/10, F16N 9/02

(54) **Schmierstoffgeber für rotierende Bauteile, insbesondere eine rotierende Hohlwelle**

(30) Priorität: 11.03.1997 DE 19709680
(71) Anmelder: Satzinger GmbH & Co., 97717 Euerdorf (DE)
(72) Erfinder: Helbig, Claus, 97453 Schonungen (DE)
(74) Vertreter: Albrecht, Rainer Harald, Dr.-Ing.

(57) **Zusammenfassung**

Die Erfindung betrifft einen Schmierstoffgeber für rotierende Bauteile, insbesondere eine rotierende Hohlwelle, mit einem am Bauteil (1) befestigten Schmierstoffbehälter (2), in dem Schmierstoffbehälter geführtem Kolben (3), einem Verschluß (4) des Schmierstoffbehälters mit mindestens einer Abgabeöffnung (5) für Schmierstoff und einer in dem Schmierstoffbehälter (2) angeordnetem Antriebseinrichtung (6) für eine Stellbewegung des Kolbens (3). Die Antriebseinrichtung (6) weist einen elektrischen Stromkreis mit einer Fliehkraftschalteinrichtung (11) auf, die mit einsetzender Rotation des zu schmierenden Bauteils den Stromkreis schließt und dadurch die Antriebseinrichtung in Betrieb setzt und bei stillstehendem Bauteil den Stromkreis öffnet und damit die Antriebseinrichtung außer Betrieb setzt. Die Antriebseinrichtung (6) ist als Gaserzeugungseinrichtung mit elektrochemischer Gaserzeugungszelle ausführbar oder kann einen batteriebetriebenen elektromotorischen Antrieb aufweisen.

## Beschreibung

Die Erfindung betrifft einen Schmierstoffgeber für rotierende Bauteile, insbesondere eine rotierende Hohlwelle. Bei der Hohlwelle kann es sich um ein Profilrohr handeln, an dessen Außenseite ein Mantelrohr schiebebeweglich geführt ist. Eine solche Anordnung bestehend aus einem Profilrohr und einem außenseitig schiebebeweglichen Mantelrohr wird als Kupplungselement eingesetzt, welches Axialbewegungen aufnimmt und Drehmomente überträgt. Die Gleitfläche zwischen dem Profilrohr und dem Mantelrohr bedarf einer regelmäßigen Schmierung.

Zum Stand der Technik gehören Schmierstoffgeber mit Schmierstoffbehälter, im Schmierstoffbehälter geführtem Kolben sowie einer ebenfalls in dem Schmierstoffbehälter angeordneten Antriebseinrichtung, die einen elektrischen Stromkreis und eine manuell betätigbare Schalteinrichtung aufweist. Die Antriebseinrichtung kann als Gaserzeugungseinrichtung mit einer elektrochemischen Gaserzeugungszelle ausgebildet sein oder einen batteriebetriebenen elektromotorischen Antrieb aufweisen. Die bekannten Schmierstoffgeber sind an der Außenseite der zu schmierenden Maschinenteile angeordnet und werden zumeist unabhängig von dem Betriebszustand der zu schmierenden Maschinenteile im Dauerbetrieb eingesetzt. Die Anordnung der Schmierstoffgeber ist aufgrund ihrer Größe oft schwierig. Sind der Rotationsbewegung einer zu schmierenden Hohlwelle Pendel- und Axialbewegungen überlagert, ist im Rahmen der bekannten Maßnahmen eine Schmierung von außenseitigen Flächen des Maschinenteils während des Betriebs nicht möglich.

Erforderliche Schmierungen werden hier in vorgegebenen Schmierintervallen von Hand während des Stillstands der Maschine durchgeführt.

Der Erfindung liegt die Aufgabe zugrunde, einen Schmierstoffgeber für rotierende Bauteile anzugeben, der mit der Rotation des Bauteils automatisch in Betrieb setzbar ist und auch dann eingesetzt werden kann, wenn der Rotationsbewegung des zu schmierenden Bauteils Axial- und Pendelbewegungen überlagert sind. Insbesondere soll der Schmierstoffgeber für Hohlwellen und Teleskoprohre, die als Kupplungselemente zur Drehmomentübertragung zwischen rotierenden Maschinenteilen eingesetzt werden, geeignet sein.

Gegenstand der Erfindung und Lösung dieser Aufgabe ist ein Schmierstoffgeber für rotierende Bauteile, insbesondere eine rotierende Hohlwelle, - mit
einem am Bauteil befestigten Schmierstoffbehälter,
in dem Schmierstoffbehälter geführtem Kolben,
einem Verschluß des Schmierstoffbehälters mit mindestens einer Abgabeöffnung für Schmierstoff und
einer in dem Schmierstoffbehälter angeordneten Antriebseinrichtung für eine Stellbewegung des Kolbens,
   wobei die Antriebseinrichtung einen elektrischen Stromkreis mit einer Fliehkraftschalteinrichtung aufweist, die mit einsetzender Rotation des zu schmierenden Bauteils den Stromkreis schließt und dadurch die Antriebseinrichtung in Betrieb setzt und bei stillstehendem Bauteil den Stromkreis öffnet und damit die Antriebseinrichtung außer Betrieb setzt.

Gemäß einer bevorzugten Ausführung der Erfindung ist die Antriebseinrichtung als Gaserzeugungseinrichtung ausgebildet und enthält der Stromkreis eine elektrochemische Gaserzeugungszelle sowie einen elektrischen Widerstand. Durch die Gaserzeugung wird an der gasbeaufschlagten Seite des Kolbens ein Druck aufgebaut, der den Kolben vorschiebt. Die Gaserzeugung setzt mit dem Schließen des Stromkreises ein und stoppt bei Unterbrechung des Stromkreises. Durch die Fliehkraftschalteinrichtung erfolgt die Gaserzeugung nur während des Betriebs des Bauteils, sobald dieses eine vorgegebene Mindestdrehzahl erreicht hat. Die Gaserzeugungseinrichtung einschließlich der Fliehkraftschalteinrichtung ist innerhalb des Schmierstoffbehälters untergebracht, so daß dieser im Antriebsbereich vollkommen geschlossen ausgeführt werden kann und die für einen störungsfreien Betrieb des Schmierstoffgebers erforderliche Dichtigkeit durch Kabeldurchführungen u. dgl. nicht beeinträchtigt ist.

Zur Schmierung einer Hohlwelle ist der Schmierstoffgeber vorzugsweise in der Hohlwelle angeordnet, wobei die Abgabeöffnung des Schmierstoffbehälters mit einer mantelseitigen Schmierstoffaustrittsöffnung der Hohlwelle in Verbindung steht. Zweckmäßig weist die Gaserzeugungseinrichtung einen scheiben- oder hülsenförmigen Träger auf, an dem die Gaserzeugungszelle, der Widerstand sowie die Fliehkraftschalteinrichtung befestigt sind. Der Schmierstoffbehälter kann aus einem Zylinderrohr bestehen, das an seinem der Gaserzeugungseinrichtung zugeordneten Ende geschlossen ist. Im Rahmen der Erfindung liegt es ferner, als Schmierstoffbehälter ein Rohr einzusetzen, welches an seinem der Gaserzeugungseinrichtung zugeordneten Ende mit einer Kappe gasdicht verschlossen ist und die Gaserzeugungseinrichtung als austauschbare Einheit in das mit der Kappe verschließbare Ende des Schmierstoffbehälters einzusetzen.

Eine weitere Ausführung der Erfindung sieht vor, daß die Antriebseinrichtung einen elektromotorischen Antrieb mit Elektromotor und Untersetzungsgetriebe, eine an den elektromotorischen Antrieb angeschlossene Gewindespindel, mindestens eine Batterie sowie eine Steuereinrichtung für den elektromotorischen Antrieb aufweist, wobei der die Fliehkraftschalteinrichtung enthaltende Stromkreis die Batterie mit der Steuereinrichtung verbindet und wobei der Kolben drehfest in dem Schmierstoffbehälter angeordnet ist, von der Gewindespindel durchfaßt sowie durch eine Drehbewegung der Gewindespindel in Ausstoßrichtung bewegbar ist. Durch die Fliehkraftschalteinrichtung wird die Steuereinrichtung eingeschaltet, sobald das zu schmierende Bauteil eine vorgegebene Mindestdrehzahl erreicht hat. Die eingeschaltete Steuereinrichtung gibt Steuerimpulse an den elektromotorischen Antrieb und steuert diesen nach einem vorgegebenen Programm. Bewährt hat sich eine Steuereinrichtung mit einem Zeitgeber sowie einem berührungslos arbeitenden Sensor, wobei der Zeitgeber in vorgegebenen Zeitintervallen einen Startimpuls für den elektromotorischen Antrieb gibt und wobei der Sensor unmittelbar oder mittelbar die Drehbewegung der Abtriebswelle überwacht und nach einer vorgebebenen Anzahl von Umdrehungen ein Stopsignal für den elektromotorischen Antrieb abgibt.

Unabhängig davon, ob die Antriebseinrichtung als Gaserzeugungseinrichtung ausgebildet ist oder einen elektromotorischen Antrieb aufweist, besteht die Fliehkraftschalteinrichtung vorzugsweise aus mindestens zwei elektrisch in Reihe geschalteten Neigungsschaltern, die außerhalb der Rotationsachse angeordnet sind und einen in einem Schaltergehäuse frei beweglichen Kontaktkörper oder eine elektrisch leitende Flüssigkeit sowie an ihrem von der Rotationsachse abgewandten Ende Schaltkontakte aufweisen und wobei die Neigungsschalter in Umfangsrichtung mit äquidistanten Abständen so angeordnet sind, daß bei Stillstand des Bauteils die Schaltkontakte mindestens eines Neigungsschalters unterbrochen sind und oberhalb einer vorgegebenen Drehzahl die Schaltkontakte aller Neigungsschalter geschlossen sind. Zweckmäßig sind die Neigungsschalter ferner schräg zur Rotationsachse angeordnet. Bei dieser Anordnung ist auch dann ein ordnungsgemäßer Betrieb sichergestellt, wenn der Schmierstoffgeber in ein Bauteil, z. B. eine Hohlwelle, mit vertikaler Rotationsachse eingesetzt ist.

In weiterer Ausgestaltung lehrt die Erfindung, daß der abgabeseitige Verschluß mit einer Dichtung austauschbar in das schmierstoffseitige Ende des Schmierstoffbehälters eingesetzt ist und an seinem vorstehenden Ende eine Mehrzahl am Umfang gleichmäßig verteilter Abgabeöffnungen für Schmierstoff aufweist, denen jeweils eine Schmierstoffaustrittsöffnung in der Hohlwelle bzw. dem zu schmierenden Bauteil zugeordnet ist. Gemäß einer bevorzugten Ausführung sind in die mantelseitigen Schmierstoffaustrittsöffnungen Nippel eingesetzt, die in die zugeordnete Abgabeöffnung am Verschluß des Schmierstoffbehälters einfassen und diese lagefixieren.

Im folgenden wird die Erfindung anhand einer lediglich ein Ausführungsbeispiel darstellenden Zeichnung ausführlich erläutert. Es zeigen schematisch
- Fig. 1: einen Längsschnitt durch eine Hohlwelle mit eingebautem Schmierstoffgeber,
- Fig. 2: einen Querschnitt durch die Fliehkraftschalteinrichtung des in Fig. 1 dargestellten Schmierstoffgebers,
- Fig. 3: den elektrischen Aufbau der Gaserzeugungseinrichtung des in Fig. 1 dargestellten Schmierstoffgebers,
- Fig. 4: den Längsschnitt durch eine weitere Ausführung des in Fig. 1 dargestellten Schmierstoffgebers im ausgebauten Zustand,
- Fig. 5: eine Ausführung des erfindungsgemäßen Schmierstoffgebers mit elektromotorischem Antrieb, dargestellt im Längsschnitt durch eine Hohlwelle.

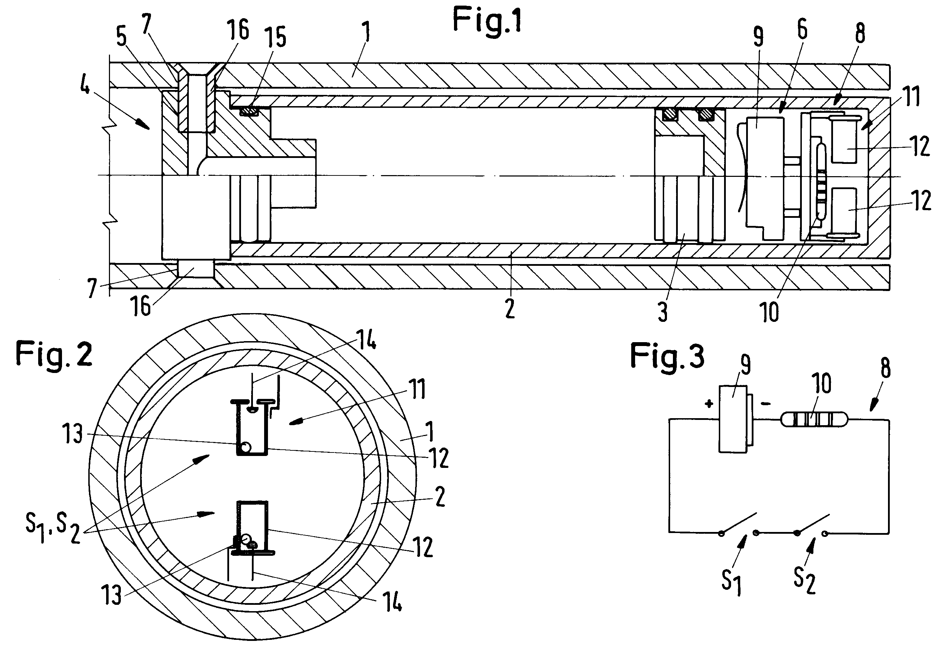

Der in Fig. 1 dargestellte Schmierstoffgeber ist in das Wellenende einer rotierenden Hohlwelle 1 eingesetzt. Zum grundsätzlichen Aufbau des Schmierstoffgebers gehören ein in der Hohlwelle 1 austauschbar montierter Schmierstoffbehälter 2, ein in dem Schmierstoffbehälter 2 geführter Kolben 3, ein Verschluß 4 des Schmierstoffbehälters 2 mit mindestens einer umfangsseitig angeordneten Abgabeöffnung 5 für Schmierstoff und eine in dem Schmierstoffbehälter 2 angeordnete Antriebseinrichtung 6. Die Abgabeöffnung 5 steht mit einer mantelseitigen Schmierstoffaustrittsöffnung 7 der Hohlwelle 1 in Verbindung.

Die Antriebseinrichtung 6 ist als Gaserzeugungseinrichtung ausgebildet und weist einen Stromkreis 8 mit einer elektrochemischen Gaserzeugungszelle 9, vorzugsweise einer Zink-Luft-Zelle, einen elektrischen Widerstand 10 sowie eine Fliehkraftschalteinrichtung 11 auf. Die Fliehkraftschalteinrichtung 11 besteht aus mindestens zwei elektrisch in Reihe geschalteten Neigungsschaltern S1, S2 (Fig. 3), die außerhalb der Hohlwellenrotationsachse angeordnet sind und einen in einem Schaltergehäuse 12 freibeweglichen Kontaktkörper 13 sowie an ihrem von der Hohlwellenrotationsachse abgewandten Ende Schaltkontakte 14 aufweisen (Fig. 2 und 3).

Die Neigungsschalter S1, S2 sind in Umfangsrichtung mit äquidistanten Abständen so angeordnet, daß bei Stillstand der Hohlwelle 1 die Schaltkontakte 14 mindestens eines Neigungsschalters S1 oder S2 unterbrochen sind. Wird die Hohlwelle 1 mit vorgegebener Drehzahl angetrieben, liegen die Kontaktkörper 13 aufgrund der Fliehkraft an den Schaltkontakten 14 an, wobei die Schaltkontakte 14 sämtlicher Neigungsschalter S1 und S2 geschlossen sind. Bei geschlossenem Stromkreis 8 wird Gas erzeugt und der Kolben 3 unter dem sich aufbauenden Gasdruck vorwärtsbewegt. Durch die Fliehkraftschalteinrichtung 11 setzt die Betätigung des Schmierstoffgebers automatisch ein mit einer Drehbewegung der Hohlwelle 1. Im Stillstand und bei unterbrochenem Stromkreis 8 stoppt die Gaserzeugung und ist der Schmierstoffgeber automatisch außer Betrieb gesetzt. Da die Gaserzeugungseinrichtung 6 einschließlich der Fliehkraftschalteinrichtung 11 innerhalb des Schmierstoffbehälters 2 untergebracht ist, kann dieser im Antriebsbereich, z. B. als einstückiges Formteil, vollkommen geschlossen ausgeführt werden. Es ist eine für den sicheren Betrieb des Schmierstoffgebers hohe Gasdichtigkeit im Antriebsbereich erreichbar.

Der Schmierstoffbehälter 2 ist im Ausführungsbeispiel zylindrisch ausgebildet. Der Verschluß 4 ist mit einer Dichtung 15 austauschbar in das schmierstoffseitige Ende des Schmierstoffbehälters 2 eingesetzt und weist an seinem vorstehenden Ende eine Mehrzahl am Umfang gleichmäßig verteilter Abgabeöffnungen 5 für Schmierstoff auf, denen jeweils eine Schmierstoffaustrittsöffnung 7 in der Hohlwelle 1 zugeordnet ist. Der Fig. 1 entnimmt man, daß in die mantelseitigen Schmierstoffaustrittsöffnungen 7 jeweils ein Nippel 16 eingesetzt ist, der in die zugeordnete Abgabeöffnung 5 am Verschluß 4 des Schmierstoffbehälters 2 einfaßt und diesen lagefixiert.

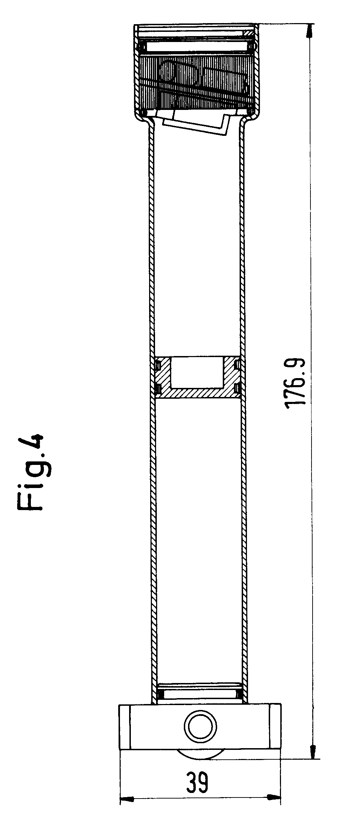

Bei der in Fig. 4 dargestellten Ausführung des Schmierstoffgebers sind die Neigungsschalter S1, S2 schräg zur Rotationsachse angeordnet. Durch die Schrägstellung der Neigungsschalter S1, S2 ist ein ordnungsgemäßer Betrieb des Schmierstoffgebers auch dann gewährleistet, wenn der Schmierstoffgeber in eine Hohlwelle bzw. ein Bauteil mit vertikaler Rotationsachse eingebaut ist. Im übrigen entnimmt man der Fig. 4, daß der Aufnahmeraum für die Fliehkraftschalteinrichtung 11 erweitert ist, damit höhere Fliehkräfte für den Schaltvorgang erzeugt werden können.

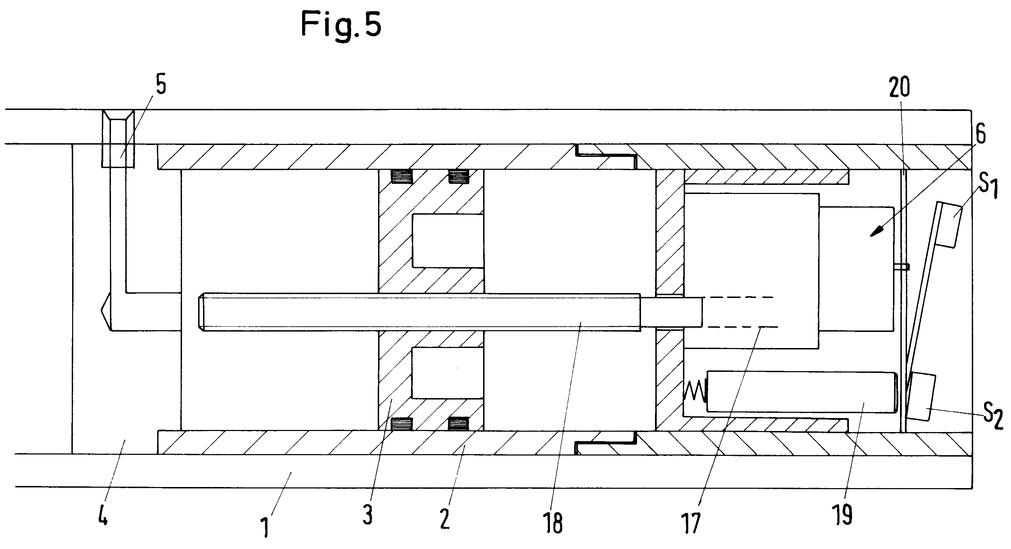

Bei den zuvor beschriebenen Ausführungen ist die Antriebseinrichtung 6 als Gaserzeugungseinrichtung ausgebildet. Die Fig. 5 zeigt eine Ausführung mit batteriebetriebenem elektromotorischen Antrieb. Die Antriebseinrichtung 6 weist einen elektromotorischen Antrieb 17 mit Elektromotor und Untersetzungsgetriebe, eine an den elektromotorischen Antrieb 17 angeschlossene Gewindespindel 18, mindestens eine Batterie 19 sowie eine Steuereinrichtung 20 in Form einer Schaltplatine für den elektromotorischen Antrieb auf. Die Fliehkraftschalteinrichtung 11 hat den zuvor beschriebenen Aufbau und ist in einen Stromkreis eingesetzt, der die Batterie 19 mit der Steuereinrichtung 20 verbindet. Der Kolben 3 ist drehfest in dem Schmierstoffbehälter 2 angeordnet, von der Gewindespindel 18 durchfaßt und durch eine Drehbewegung der Gewindespindel 18 in Ausstoßrichtung bewegbar.

## Patentansprüche

1. Schmierstoffgeber für rotierende Bauteile, insbesondere für eine rotierende Hohlwelle, - mit
einem am Bauteil (1) befestigten Schmierstoffbehälter (2),
in dem Schmierstoffbehälter geführtem Kolben (3),
einem Verschluß (4) des Schmierstoffbehälters (2) mit mindestens einer Abgabeöffnung (5) für Schmierstoff und
einer in dem Schmierstoffbehälter (3) angeordneten Antriebseinrichtung (6) für eine Stellbewegung des Kolbens,
wobei die Antriebseinrichtung (6) einen elektrischen Stromkreis (8) mit einer Fliehkraftschalteinrichtung (11) aufweist, die mit einsetzender Rotation des zu schmierenden Bauteils (1) den Stromkreis (8) schließt und dadurch die Antriebseinrichtung (6) in Betrieb setzt und bei stillstehendem Bauteil (1) den Stromkreis (8) öffnet und damit die Antriebseinrichtung (6) außer Betrieb setzt.

2. Schmierstoffgeber nach Anspruch 1, wobei die Antriebseinrichtung (6) als Gaserzeugungseinrichtung ausgebildet ist und der Stromkreis (8) eine elektrochemische Gaserzeugungszelle (9) sowie einen elektrischen Widerstand (10) enthält.

3. Schmierstoffgeber nach Anspruch 2, wobei die Gaserzeugungseinrichtung (6) einen scheiben- oder hülsenförmigen Träger aufweist, an dem die Gaserzeugungszelle (9), der Widerstand (10) sowie die Fliehkraftschalteinrichtung (11) befestigt sind.

4. Schmierstoffgeber nach Anspruch 2 oder 3, wobei der Schmierstoffbehälter (2) aus einem Rohr besteht, das an seinem der Gaserzeugungseinrichtung (6) zugeordneten Ende geschlossen ist.

5. Schmierstoffgeber nach Anspruch 2 oder 3, wobei der Schmierstoffbehälter (2) aus einem Rohr besteht, welches an seinem der Gaserzeugungseinrichtung zugeordneten Ende mit einer Kappe gasdicht verschlossen ist und wobei die Gaserzeugungseinrichtung (6) als austauschbare Einheit in das mit der Kappe verschließbare Ende des Schmierstoffbehälters (2) eingesetzt ist.

6. Schmierstoffgeber nach Anspruch 1, wobei die Antriebseinrichtung (6) einen elektromotorischen Antrieb (17) mit Elektromotor und Untersetzungsgetriebe, eine an den elektromotorischen Antrieb (17) angeschlossene Gewindespindel (18), mindestens eine Batterie (19) sowie eine Steuereinrichtung (20) für den elektromotorischen Antrieb (17) aufweist, wobei der die Fliehkraftschalteinrichtung (11) enthaltende Stromkreis die Batterie (19) mit der Steuereinrichtung (20) verbindet und wobei der Kolben (3) drehfest in dem Schmierstoffbehälter (2) angeordnet ist, von der Gewindespindel (18) durchfaßt sowie durch eine Drehbewegung der Gewindespindel (18) in Ausstoßrichtung bewegbar ist.

7. Schmierstoffgeber nach einem der Ansprüche 1 bis 6, wobei die Fliehkraftschalteinrichtung (11) aus mindestens zwei elektrisch in Reihe geschalteten Neigungsschaltern (S1, S2) besteht, die außerhalb der Rotationsachse angeordnet sind und einen in einem Schaltergehäuse (12) frei beweglichen Kontaktkörper (13) oder eine elektrisch leitende Flüssigkeit sowie an ihrem von der Hohlwellenrotationsachse abgewandten Ende Schaltkontakte aufweisen und wobei die Neigungsschalter (S1, S2) in Umfangsrichtung mit äquidistanten Abständen so angeordnet sind, daß bei Stillstand des Bauteils (1) die Schaltkontakte (14) mindestens eines Neigungsschalters (S1 oder S2) unterbrochen sind und oberhalb einer vorgegebenen Drehzahl die Schaltkontakte (14) aller Neigungsschalter (S1 und S2) geschlossen sind.

8. Schmierstoffgeber nach Anspruch 7, wobei die Neigungsschalter (S1 und S2) schräg zur Rotationsachse angeordnet sind.

9. Schmierstoffgeber nach einem der Ansprüche 1 bis 8, wobei der Verschluß (4) mit einer Dichtung (15) austauschbar in das schmierstoffseitige Ende des Schmierstoffbehälters (2) eingesetzt ist und an seinem vorstehenden Ende eine Mehrzahl am Umfang gleichmäßig verteilter Abgabeöffnungen (5) für Schmierstoff aufweist, denen jeweils eine Schmierstoffaustrittsöffnung (7) in der Hohlwelle (1) zugeordnet ist.

10. Schmierstoffgeber nach einem der Ansprüche 1 bis 9, wobei in die mantelseitigen Schmierstoffaustrittsöffnungen (7) jeweils ein Nippel (16) eingesetzt ist, der in die zugeordnete Abgabeöffnung (5) am Verschluß (4) des Schmierstoffbehälters (2) einfaßt und diesen lagefixiert.
